# EUROPEAN PATENT APPLICATION

(11) **EP 0 588 484 A2**
(43) Date of publication of application: **23.03.1994**
(21) Application number: 93306231.7
(22) Date of filing: 06.08.1993
(51) Int. Cl.: G02F 1/137, G02F 1/1335

(54) **A liquid crystal display**

(30) Priority: 24.08.1992 JP 223824/92
(71) Applicant: HITACHI, LTD., Chiyoda-ku, Tokyo 101 (JP); HITACHI DEVICE ENGINEERING CO., LTD., Mobara-shi, Chiba-ken 297 (JP)
(72) Inventor: Terao, Hiromu, Mito-shi, Ibaraki 310 (JP); Kondo, Katsumi, Katsuta-shi, Ibaraki 312 (JP); Nakada, Tadao, Katsuta-shi, Ibaraki 312 (JP); Ohara, Shuichi, Hitachi-shi, Ibaraki 319-14 (JP); Hiyama, Ikuo, Hitachi-shi, Ibaraki 316 (JP); Kitajima, Masaki, Hitachi Ota-shi, Ibaraki 313 (JP); Suzuki, Kenkichi, Oxford OX7 7DT (GB); Madokoro, Hitomi, Mobara-shi, Chiba 297 (JP)
(74) Representative: Calderbank, Thomas Roger

(57) **Abstract**

A liquid crystal display has a nematic liquid crystal (60), opposite sides of which are contacted by respective orientation films (50, 51). Electrodes (40, 41, 42) on opposite sides of the nematic liquid crystal (60) are used to control the transmission of light through the nematic liquid crystal (60) and polarizing plates (10, 11) by varying the optical rotation of polarized light through the nematic liquid crystal (60). In such an arrangement:
i) the dielectric constant anisotropy of the nematic liquid crystal (60) is at least 4 ;
ii) the orientation films (50, 51) are arranged so that the nematic liquid crystal (60) has a twist angle greater than 90° but not greater than 150° ;
iii) the electrode (42) on one side of the nematic liquid crystal forms a matrix of active elements and a drive circuit (90) applies an alternating voltage to the other electrode (40); and/or
iv) the liquid crystal display includes a phase difference plate (20, 21) with the product of the thickness and refractive index anisotropy of the phase difference plate (20, 21) being at least 0.005µm but not greater than 0.2µm.

In this way, the voltage needed to switch the liquid crystal display between the state in which it passes light and the state on which it blocks light may be reduced.

## Description

The present invention relates to a liquid crystal display. It is particularly, but not exclusively, concerned with liquid crystals employing active driving elements and in particular liquid crystal displays known as TFT displays.

In a liquid crystal display, such as in a TFT liquid crystal display, a nematic of liquid crystal layer is located between a pair of polarization plates or between a polarization plate and a reflector. As polarized light passes through the liquid crystal, its direction of polarization is changed, and this change may be varied by applying a suitable electric field across the nematic liquid crystal, using electrodes. Therefore, at one voltage, the polarization plates and nematic liquid crystal layer are arranged so that light will pass therethrough whilst at another voltage, the direction of polarization is twisted as the light passes through the nematic liquid crystal layer so that light passing from one polarization plate is blocked by the other polarization plate. Normally, the liquid crystal display is arranged so that light passes therethrough when no voltage is applied to the electrodes, but it is also possible to provide a liquid crystal display in which the light is blocked at zero volts, and a voltage has to be applied in order for the display to pass light therethrough.

Consider now a liquid crystal display which is arranged so that light passes therethrough when no voltage is applied to the electrodes. When that voltage is increased, there is a low voltage region in which the passage of light is unaffected. However, at a threshold voltage, the effect of the electric field across the electrodes on the nematic liquid crystal reduces the amount of light transmitted until the light is blocked at a saturation voltage. In practical liquid crystal devices, some light may pass even at voltages less than the saturation voltage, so that saturation voltage is normally taken to be a voltage of which the light transmission is 1% or less the maximum transmission.

The values of the threshold voltage and the saturation voltage are dependent on properties of the liquid crystal device. In some cases, those properties are intrinsic to the nematic liquid crystal, and others are dependent on the overall structure of the liquid crystal device.

Many difference nematic liquid crystals are known. One property of a nematic liquid crystal is that it exhibits an anisotropic dielectric constant. That anisotropy is measured as the difference between the dielectric constant parallel to the orientation of liquid crystal molecules and the dielectric constant perpendicular to that orientation. Most nematic liquid crystals have a positive dielectric constant anisotropy but liquid crystals for a TFT liquid crystal display with a negative dielectric constant anisotropy are known.

Most known nematic liquid crystals have a dielectric constant anisotropy of four or less. However, nematic liquid crystals have recently been developed which exhibit higher dielectric constant anistropies, and times of the order of seven or greater. Examples of such nematic liquid crystals of high dielectric constant anisotropy are disclosed in, for example, JP-A-2-229139 (1990) and Proceedings of the 6th Liquid Crystal Seminar, June 1992, (organised by Merck Japan Limited) p49.

It is normal for a liquid crystal display to be designed so that the electrode on one side of the liquid crystal is in the form of a matrix of elements (elements which are active in a TFT liquid crystal display) and for the other electrode to be a single common electrode. Then, by controlling the electrodes of the matrix, some parts of the liquid crystal may be made block light whilst others pass light, so that an image can be generated. The element in the form of a matrix then receives pulses but the image can be changed. It is possible to operate such a liquid crystal display so that the common electrode is held substantially at zero volts, so that a saturation voltage or greater, must be applied to the elements of the matrix electrode. However, it is also known to apply alternating voltages to the common electrode, which altenating voltages are timed so that they are of opposite phase to the pulses applied to the matrix element at the time those pulses are applied. Then, the effective voltage across the nematic liquid crystal is represented by the sum of the voltages applied to the matrix of elements and the altenating voltage applied to the common electrode. JP-A-55-157780, JP-A-2-913 and JP-A-3-177890 disclose such arrangements.

Normal liquid crystal displays have orientation films on opposite surfaces of the nematic liquid crystal layer, and those orientation films, together with the nematic liquid crystal layer itself, determine the twist angle of the liquid crystal, being the angle through which polarized light is rotated by the nematic liquid crystal layer. Most liquid crystal displays have a twist angle of 90° or less. However, proposals have been made for liquid crystal displays with larger twist angles. 4aln particular, JP-A-60-162555, JP-A-60-16225, JP-A-60-16226, JP-A-60-52827, JP-A-61-91625 and JP-A-61-193125 disclose liquid crystal displays with twist angles greater than 90°. It should be noted that all those disclosures concern liquid crystal displays which do not have active driving elements.

Consider in a liquid crystal display device which passes light when no voltage is applied. In order to change the liquid crystal display device between the state in which it passes light, and the stage in which it blocks light, voltage between the electrodes of the liquid crystal display must be changed from the zero volts to the saturation voltage or greater. Therefore, the elements controlling that voltage must themselves be capable of withstanding voltages at least as great as the saturation voltage. In normal liquid crystal displays, that voltage is greater than 5V, and this causes a problem, particularly in TFT liquid crystal displays. In such displays, the cost of driving elements which are capable of withstanding more than 5V is large, and the cost of those active driving elements contributes significantly to the total cost of the liquid crystal display. Although, less expensive active driving elements are available, they are not capable of withstanding voltages greater than 5V.

Asimilar problem occurs in a liquid crystal display device which bloocks lightwhen no voltage is applied. Voltages of 5V or greater need to be applied in order to change the liquid crystal display device to the state in which it passes light.

As has previously been mentioned, nematic liquid crystals have recently been developed with a large dielectric constant anisotropy. The dielectric constant anisotropy affects the threshold voltage of the liquid crystal display, and that threshold voltage reduces with increased dielectric constant anisotropy. Furthermore, the twist angle of the liquid crystal display affects the difference between the saturation voltage and the threshold voltage.

The inventors of the present invention have realized that these two effects, when combined, are sufficient to reduce the saturation voltage to below 5V, so permitting less expensive driving elements to be used.

Thus, according to a first aspect of the present invention, it is proposed that a liquid crystal display includes a nematic liquid crystal having a dielectric constant anisotropy greater than 4, and has orientation films arranged such that the nematic liquid crystal has a twist angle greater than 90° but not greater than 150°.

As discussed above, it is known to provide a liquid crystal display in which the electrode on one side of the nematic liquid crystal forms a matrix of active elements, and the drive circuit of the electrodes is arranged to apply an alternating (AC) voltage to the electrode on the other side of the nematic liquid crystal. Since this also has the effect of reducing the voltage which the drive elements need to withstand, it is preferable that the use of such an alternating voltage is incorporated in the present invention. Indeed, if this feature is combined with use of orientation films arranged such that the nematic liquid crystal has a twist angle greater than 90° but not greater than 150°, it is possible to use inexpensive drive elements even if the nematic liquid crystal has a dielectric constant anisotropy of 4 or less. Thus, this represents a second, independent, aspect of the present invention.

In a further development of the present invention, a phase difference plate is provided. If the product of the thickness of the phase difference plate and the refractive index anisotropy of the phase difference plate is between 0.005wm and 0.2wm (inclusive), the behavior of the nematic liquid crystal in a voltage region close to the saturation voltage is improved. The change in transmissivity in that voltage region is made more abrupt, thus effectively reducing the saturation voltage. Therefore, the case of such a phase difference plate is desirable in the present invention. Indeed, the use of such a phase difference plate together with orientation films arranged such that the nematic liquid crystal has a twist angle greater than 90° but not greater than 150° again permits inexpensive drive elements to be used, and therefore represents a third independent aspect of the present invention. Of course, the use of such a phase difference plate is also possible within the first and second aspects mentioned previously. Alternatively, such a phase difference plate may be used together with nematic liquid crystals having a dielectric constant anisotropy greater than 4 and/or together with the application of and AC voltage to the electrodes on the opposite side of the nematic liquid crystal from the matrix of active elements, thus, forming fourth and fifth aspects of the present invention. In those aspects of the present invention discussed above in which the nematic liquid crystal has a twist angle greater than 90° and less than 150°, it is preferable that the twist angle is not smaller than 95°. It is also preferable that the twist angle is not greater than 120°.

Since a liquid crystal display according to the present invention affects the passage of light therethrough, and that effect may be varied by varying the voltage between the electrodes, the liquid crystal display may be changed between transmissive and opaque states, thus giving a black and white display. However, a color filter or color filters may be incorporated into the display.

The present invention is, as has previously been mentioned, particularly applicable to a TFT liquid crystal display. It is applicable to liquid crystal display devices which change from a light transmissive state to a light blocking state with increasing voltage, and to liquid crystal display devices which change from a light blocking state to a light transmissive state with increasing voltage. Normally, the nematic liquid crystal will be located between a pair of polarization plates. However, the present invention is also applicable to liquid crystal display devices having other polarization arrangements, such as a single polarization plate and a reflector.

Embodiments of the present invention will now be described in detail by way of example, with reference to the accompanying drawings in which:
Figs. 1(a) and 1(b) illustrate a liquid crystal display device being a first embodiment of the present invention, Fig. 1 (a) being a schematic sectional view of the liquid crystal display device and Fig 1 (b) being a top view of the liquid crystal display device showing the optical arrangement;
Fig. 2 is a graph showing transmissivity/voltage characteristics of a first example of the embodiment of Fig. 1(a);
Fig. 3 shows the transmissivity/voltage characteristics of a liquid crystal display being a second example of the embodiment of Fig 1(a);
Fig. 4 shows the transmissivity/voltage characteristics of a third example of the embodiment of Fig 1 (a);
Fig. 5 shows the transmissivity/voltage characteristics of a liquid crystal display being a fourth example of the embodiment of Fig 1(a);
Fig. 6 shows the transmissivity/voltage characteristics of a liquid crystal display being a fifth example of the embodiment of Fig 1 (a);
Fig. 7(a) and 7(b) illustrate a liquid crystal display device being a second embodiment of the present invention, Fig. 7(a) being a schematic sectional view of the liquid crystal display device and Fig. 7(b) being a top view of the liquid crystal display device showing the optical arrangement;
Fig. 8 shows the transmissivity/voltage characteristics of a first example of the second embodiment of Fig. 7(a);
Fig. 9 shows the transmissivity/voltage characteristics of a second example of the embodiment of Fig. 7(a);
Figs. 10(a) and 10(b) show liquid crystal display device being a third embodiment of the present invention, Fig. 10(a) being a schematic sectional view of the liquid crystal display device and Fig. 10(b) being a top view of the liquid crystal display device showing the optical arrangements;
Figs. 11(a) and 11(b) show a liquid crystal display device being a fourth embodiment of the present invention, Fig. 11 (a) being a schematic sectional view of the liquid crystal display device and Fig. 11 (b) being a top view of the liquid crystal display device showing the optical arrangements;
Fig. 12 shows the transmissivity/voltage characteristics of the liquid crystal display device of Fig. 11 (a);
Figs. 13(a) and 13(b) illustrate a liquid crystal display device being a fifth embodiment of the present invention, Fig. 13(a) being a schematic sectional view of the liquid crystal display devioce and Fig. 13(b) being a top view of the liquid crystal display device showing the optical arrangement;
Figs. 14(a) and 14(b) show a liquid crystal display device being a sixth embodiment of the present invention, Fig. 14(a) being a schematic sectional view of the liquid crystal display device and Fig. 14(b) being a top view of the liquid crystal display device showing the optical arrangement;
Fig. 15 shows the transmissivity/voltage characteristics of the embodiment of Fig. 14(a);
Figs. 16(a) and 16(b) showa liquid crystal display device being a seventh embodiment of the present invention, Fig. 16(a) being a sectional view of the liquid crystal display device and Fig. 16(b) being a top view of the liquid crystal display device showing the optical arrangement; and
Fig. 17 shows the transmissivity/voltage characteristics of a liquid crystal display device being an eighth embodiment of the present invention.

### Example 1

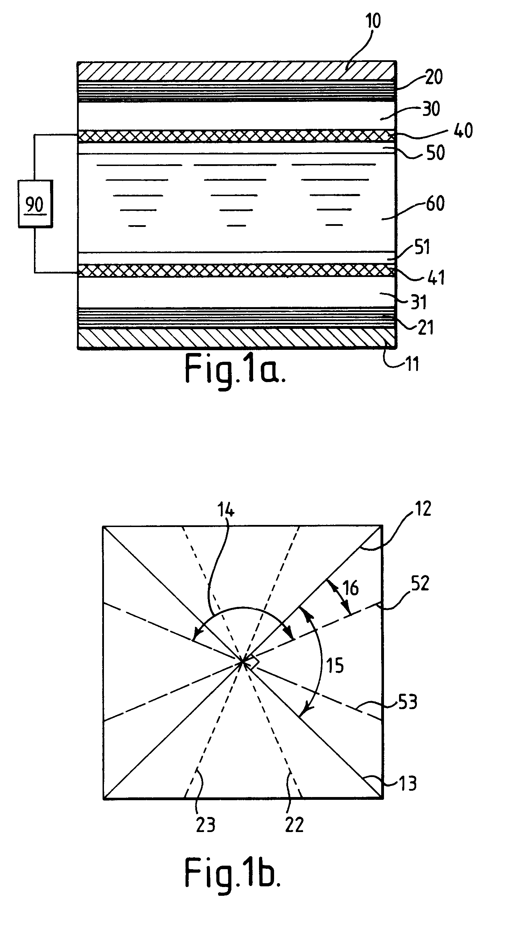

Figs. 1(a) and 1(b) illustrate a liquid crystal display being a first embodiment of the present invention. Fig. 1 (a) is a schematic sectional view of a liquid crystal display according to the present invention and Fig. 1(b) is a top view of the liquid crystal display showing the optical arrangement.

As shown in Fig. 1 (a), transparent electrodes 40, 41 are formed on respective optically-transparent substrates 30, 31 and polarization plates 10, 11 are arranged outwardly of the respective substrates 30, 31. There are phase difference plates 20,21 between the polarization plates 10, 11 and the substrates 30, 31, and there are orientation films 50, 51 subjected to unidirectional rubbing inwardly of the electrodes, A nematic liquid crystal layer 60 is held between the orientation films 50, 51. A drive circuit 90 connected to a power supply for applying voltage to the nematic liquid crystal layer 60 is connected to the transparent electrodes 40, 41.

Fig. 1(b) shows the polarization axes 12, 13 of the respective polarization plates 10, 11, the rubbing directions 52,53 of the respective orientation films 50, 51, the optical axes 22, 23 of the respective phase difference plates 20, 21, twist angle 14 of the nematic liquid crystal layer 60, the angle 15 between the polarization axes of the polarization plates 10, 11, and the angle 16 between the polarization axis 12 and the rubbing directions 52.

In a first example of the structure of Fig. 1, the angle 15 between the polarization axes of the polarization plates was set at 90°, the twist angle 14 of the nematic liquid crystal layer set at 95°, and the angle 16 between the polarization axis 12 and the rubbing direction 52 set at 2.5°. A composition (eg. that known as ZLI4580 of Merck & Co., Inc.; An = 0.1050) having a compound of cyanophenyl cyclohexan as its main ingredient was used for the liquid crystal; a material of polyvinyl alcohol (eg. that known as G1220DU of Nitto Electric Industrial Co., Ltd., polarization: 99.95%) for the polarization plate; and polyimide (eg. that known as RN - 718 of Nissan Chemical Industries, Ltd.) for the orientation film. The thickness of the nematic liquid crystal layer was set at 5.3 µm and And of the nematic liquid crystal layer set at 0.56 µm. The two phase difference plates 20, 21 were formed by two uniaxially-oriented films (polycarbonate) with And of 0.03 µm arranged so that the angle between the optical axis 22 of the phase difference plate 20 and the rubbing direction 52 of the orientation film 50 and the angle between the optical axis 23 of the phase difference plate 21 and the rubbing direction 53 of the orientation film 51 were both set at 90°. The two films were adhered using an acrylic group adhesive agent.

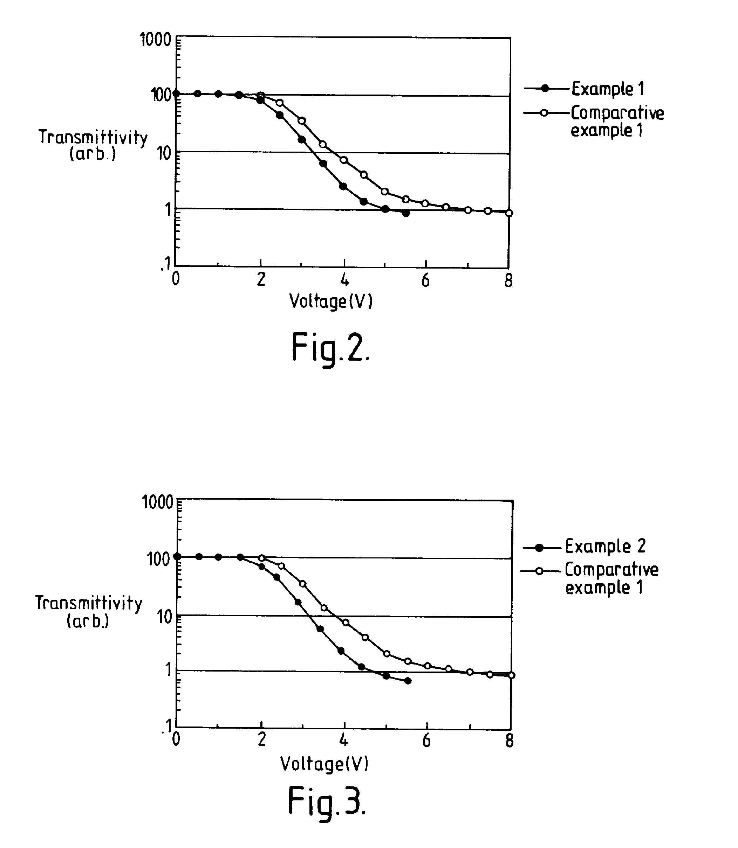

Fig. 2 shows the transmissivity/voltage characteristics of this liquid crystal display. The transmissivity at 5.0 V is 1% of that at zero volt and this makes it possible to reduce the drive voltage as compared with the case (Comparative Example 1, to be discussed later) where the voltage involved was 7.1 V when the polarization axes and the rubbing directions were set parallel at a twist angle of 90° without phase difference plates. The phase difference plates compensates for the very small phase difference used in this embodiment of the present invention, so as to make the contrast greater and with And placed under control, a bright liquid crystal display becomes possible.

Thus, this example is an arrangement with a twist angle of 95° (ie. greater than 90° but not greater than 150°) and a phase difference plate, The product of the thickness of the phase difference plate and the refractive index anisotropy of the phase difference plate is 0.030wm (ie. at least 0.005wm but not greater than 0.2µm). The contrast and brightness are improved because the nematic liquid crystal used in this embodiment has a high transmissivity below the threshold voltage.

### Example 2

The structure of the liquid crystal display in this second example of the first embodiment was similar to the that described the first example, except as explained below.

In this second example, the schematic sectional view and the top view of this liquid crystal display were as shown in Figs. 1(a) and 1(b), respectively. However, in Fig. 1(b), the twist angle 14 of the nematic liquid crystal layer, and the angle 16 between the polarization axis 12 and the rubbing direction 52 were set at 105° and 7.5°, respectively. To form the phase difference plate, two uniaxially-oriented films with resultant And of 0.04 µm were used. The angle between the optical axis 22 of the phase difference plate 20 and the rubbing direction 52 of the orientation film 50 and the angle between the optical axis 23 of the phase difference plate 21 and the rubbing direction 53 of the orientation film 51 were set at 90°.

Fig. 3 shows the transmissivity/voltage characteristics of the liquid crystal display of this second example. The transmissivity at 4.8 V is 1 % of that at zero volts and this makes it possible to reduce the drive voltage as in Example 1, and with the same advantages.

Thus, this example illustrates a liquid crystal display with a twist angle of 105°. It also uses a phase difference plate forwhich the product of the thickness and the refractive index anisotropy is 0.04wm.

### Example 3

The structure of a liquid crystal display in this third example of the first embodiment was again similar to the front embodiment described in the first example, except as explained below.

In the third example the schematic sectional view and the top view of this liquid crystal display are as shown in Figs. 1(a) and 1(b), respectively. However, in Fig. 1(b), the twist angle 14 of the nematic liquid crystal layer, and the angle 16 between the polarization axis 12 and the rubbing direction 52 were set at 120° and 15°, respectively. To form the phase difference plate, two uniaxially-oriented films with resultant And of 0.04 µm were used. The angle between the optical axis 22 of the phase difference plate 20 and the rubbing direction 52 of the orientation film 50 and the angle between the optical axis 23 of the phase difference plate 21 and the rubbing direction 53 of the orientation film 51 were set at 90°.

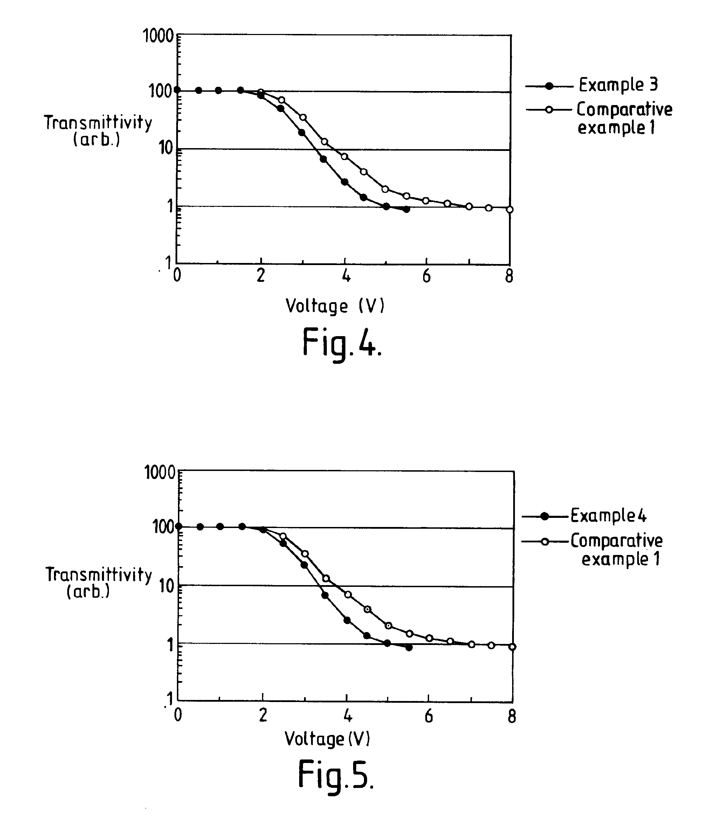

Fig. 4 shows the transmissivity/voltage characteristics of this liquid crystal display. The transmissivity at 4.9 V is 1 % of that at zero volt and this makes it possible to reduce the drive voltage as in the first example, and with the same advantages.

This example thus shows a liquid crystal display with a twist angle of 120°, and with a phase difference plate for which the product of the thickness and the refractive index anisotropy is 0.04wm.

### Example 4

The structure of a liquid crystal display in this fourth example of the first embodiment was again similar to that described in the first example, except as discussed below.

In the fourth example, the schematic sectional view and the top view of this liquid crystal display are as shown in Figs. 1(a) and 1(b), respectively. However, in Fig. 1 (b), the twist angle 14 of the nematic liquid crystal layer, and the angle 16 between the polarization axis 12 and the rubbing direction 52 were set at 135° and 22.5°, respectively. To form the phase difference plate, two uniaxially-oriented films with resultant And of 0.05 µm were used. The angle between the optical axis 22 of the phase difference plate 20 and the rubbing direction 52 of the orientation film 50 and the angle between the optical axis 23 of the phase difference plate 21 and the rubbing direction 53 of the orientation film 51 were set at 90°.

Fig. 5 shows the transmissivity/voltage characteristics of this liquid crystal display. The transmissivity at 5.0 V is 1 % of that at zero volt and this makes it possible to reduce the drive voltage as in Example 1, and with the same advantages.

Thus, this example shows a liquid crystal display with a twist angle of 135° and with a phase difference plate, for which the product of the thickness and the refractive index anisotropy is 0.05wm.

### Example 5

The structure of a liquid crystal display of a fifth example of the first embodiment was again similar to that described in the first example, except as described below.

In the fifth example, the schematic sectional view and a top view of this liquid crystal display are as shown in Figs. 1(a) and 1(b), respectively. However, in Fig. 1 (b), the twist angle 14 of the nematic liquid crystal layer, and the angle 16 between the polarization axis 12 and the rubbing direction 52 were set at 150° and 30°, respectively. To form the phase difference plate, two uniaxially-oriented films with resultant And of 0.05 µm were used. The angle between the optical axis 22 of the phase difference plate 20 and the rubbing direction 52 of the orientation film 50 and the angle between the optical axis 23 of the phase difference plate 21 and the rubbing direction 53 of the orientation film 51 were set at 90°.

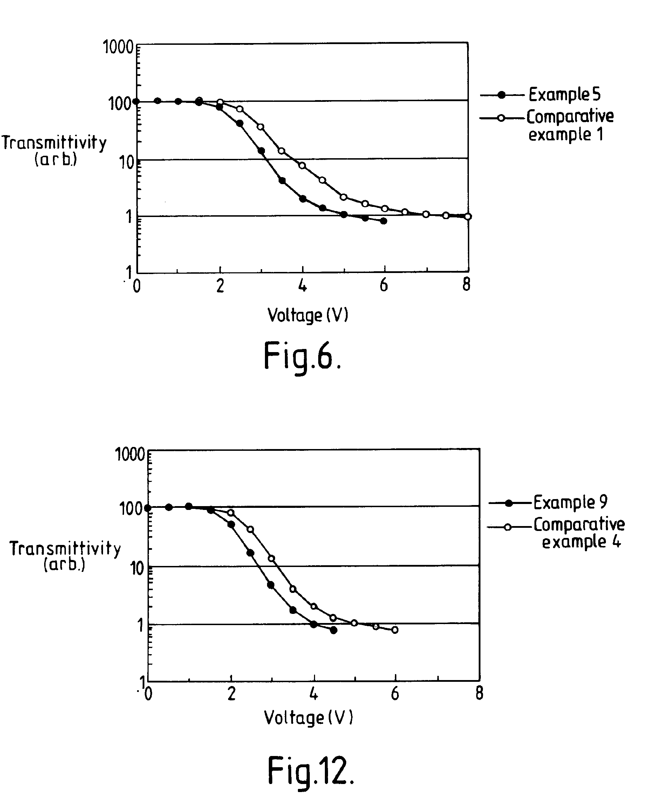

Fig. 6 shows the transmissivity/voltage characteristics of this liquid crystal display. The transmissivity at 5.0 V is 1% of that at zero volt and this makes it possible to reduce the drive voltage as in the first example, and with the same advantages.

Thus, this embodiment illustrates a liquid crystal display with a twist angle of 150° and with h a phase difference plate, for which the product of the thickness and the refractive index anisotropy is 0.05wm.

### Example 6

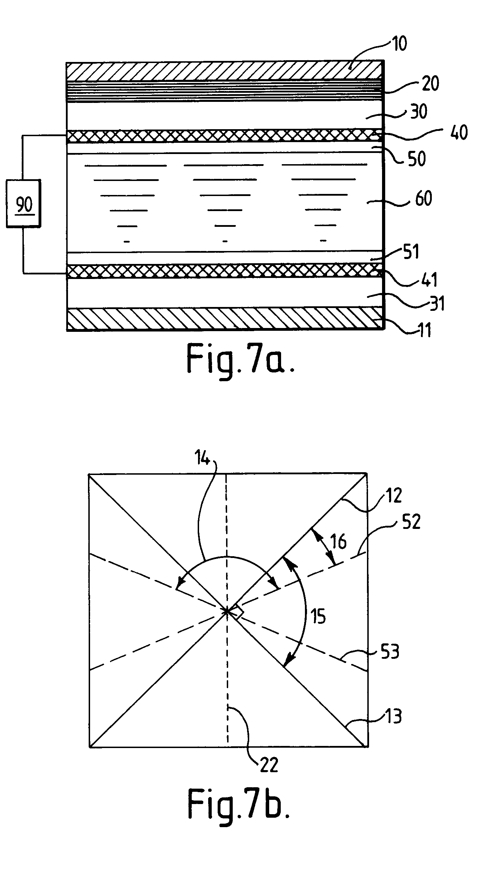

Figs. 7(a) and 7(b) illustrate a liquid crystal display being a second embodiment of the present invention. Fig. 7(a) is a schematic sectional view of a liquid crystal display according to the present invention and Fig. 7(b) is a top view of the liquid crystal display showing the optical arrangement.

As shown in Fig. 7(a), transparent electrodes 40, 41 are formed on respective optically-transparent substrates 30, 31 and polarization plates 10, 11 are arranged outwardly of the respective substrates 30, 31. There is a phase difference plate 20 between the polarization plate 10 and the substrate 30, and orientation films 50, 51 subjected to unidirectional rubbing inwardly in the electrodes. A nematic liquid crystal layer 60 is held between the orientation films 50, 51. A drive circuit 90 connected to a power supply for applying voltage to the nematic liquid crystal layer 60 is connected to the transparent electrodes 40, 41. Fig. 7(b) showing the polarization axes 12, 13 of the respective polarization plates 10,11, the rubbing directions 52, 53 of the respective orientation films 50, 51, the optical axis 22 of the phase difference plate 20, the twist angle 14 of the nematic liquid crystal layer 60, the angle 15 between the polarization axes of the polarization plates 10, 11, and the angle 16 between the polarization axis 12 and the rubbing direction 52.

In a first example of the structure of Fig. 7(a), the angle 15 between the polarization axes of the polarization plates was set at 90°, the twisted angle 14 of the nematic liquid crystal layer set at 105°, and the angle 16 between the polarization axis 12 and the rubbing direction 52 set at 7.5°. A liquid crystal and polarization plates, and orientation films similar to those of example of the first embodiment were used. The thickness of the nematic liquid crystal layer was set at 5.3 µm and And of the nematic liquid crystal lay- erat 0.56 f,.lm. Two uniaxially-oriented films of polycarbonate with And at 0.56 µm and 0.5 µm were stack-bonded to form the phase difference plate 20 so as to make the directions of orientation of the films cross at right angles. The phase difference plate formed of the two films had an optical axis in the direction of orientation of the polycarbonate films with And set at 0.56 µm. Thus, it was usable as a single phase difference plate having a phase difference of 0.06 µm. The optical axis 22 of the phase difference plate 20 formed of the two polycarbonate films made an angle of 90° with the direction of the vector sum of the rubbing directions 52, 53 of the orientation films 50, 51.

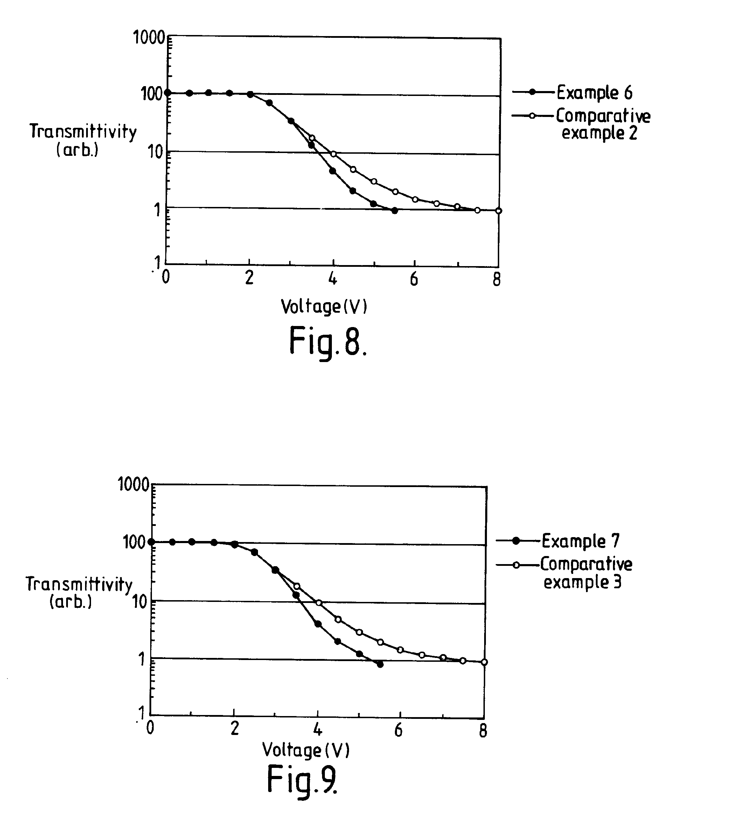

Fig. 8 shows the transmissivity/voltage characteristics of this liquid crystal display. The transmissivity at 5.0 V is 1 % of that at zero volt and this makes it possible to reduce the drive voltage as compared with the case (Comparative Example 2 to be discussed later) where the voltage involved was 7.1 V when the polarization axes and the rubbing directions were set parallel at a twist angle of 90° without phase difference plates. The phase difference plate compensate, for the very small phase difference so as to make the contrast greater. Thus, with And placed under control, a bright liquid crystal display becomes possible.

Thus, this example corresponds to Example 2, in that the twist angle is 105°, but it has only one phase difference plate.

### Example 7

The structure of a liquid crystal display of a second example of the second embodiment was similar to that described in Example 6 except as described below.

The structure of this liquid crystal display was as shown in Fig. 7(a). One uniaxially-oriented film with And at 0.08 µm was used as the phase difference plate. The optical axis 22 of the phase difference plate 20 was so arranged as to make an angle of 90° with the direction of the vector sum of the rubbing directions 52, 53 of the orientation films 50, 51.

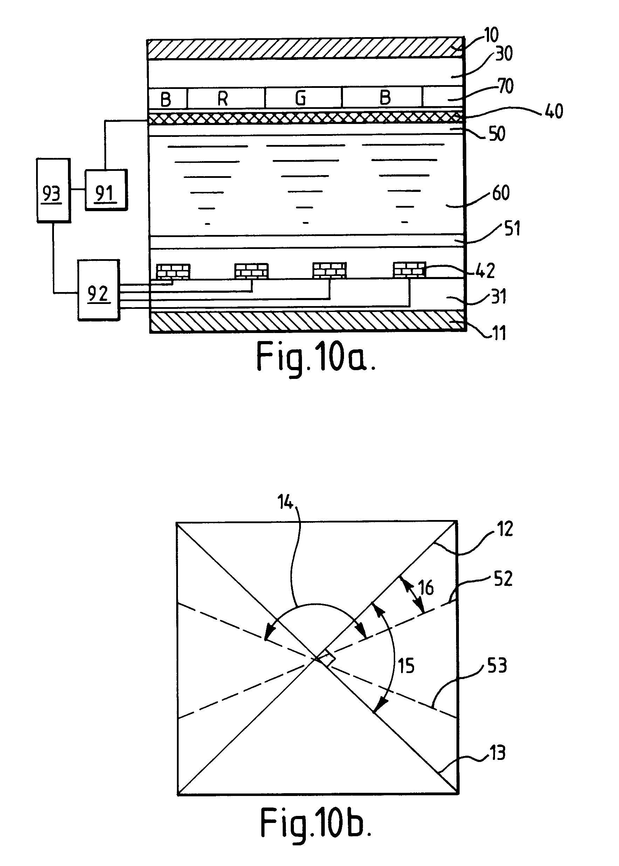

Fig. 9 shows the transmissivity/voltage characteristics of this liquid crystal display. The transmissivity at 5.0 V is 1% of that at zero volt and this makes it possible to reduce the drive voltage as compared with a case (Comparative Example 3 to be discussed later) where the voltage involved was 7.1 Vwhen the polarization axes and the rubbing directions were set parallel at a twisted angle of 90° without phase difference plates. The phase difference plate compensates for the very small phase difference so as to make the contrast greater. The value of And of the phase difference plate to be inserted may suitably be selected from the range between 0.005 µm ≦ And Z 0.2 µm in relation to the twist angle and the positions of the polarization plates. With And determined, a bright liquid crystal display becomes possible.

Thus, this example corresponds to Example 6 but with a phase difference plate of a single film.

### Example 8

Figs. 10(a) and 10(b) illustrate a liquid crystal display being a third embodiment of the present invention. Fig. 10(a) is a schematic sectional view of a liquid crystal display according to the present invention and Fig. 10(b) is a top view of the liquid crystal display showing the optical arrangement.

In the third embodiment shown in Fig. 10(a), a transparent common electrode 40 is formed on an optically-transparent substrate 30 and a substrate 31 is provided with active elements 42 for switching the applied voltage on a pixel basis. There are also a common voltage supply circuit 91, a scanning voltage.signal voltage supply circuit 92, and a supply source 93 for supplying a control signal, a data signal and supply voltage to the circuits 91, 92. There is a color filter 70 between the substrate 30 and the electrode 40, and polarization plates 10, 11 are also arranged outwardly of the substrates 30, 31. Orientation films 50, 51 subjected to unidirectional rubbing are provided inwardly of the electrodes. A nematic liquid crystal layer 60 is held between the orientation films 50, 51.

Fig. 10(b) shows the polarization axes 12, 13 of the respective polarization plates 10, 11, rubbing directions 52, 53 of the respective orientation films 50, 51, the twist angle 14 of the nematic liquid crystal layer 60, the angle 15 between the polarization axes of the polarization plates 10, 11, and the angle 16 between the polarization axis 12 and the rubbing direction 52.

In the structure of Fig. 10(b), the angle 15 between the polarization axes of the polarization plates was set at 90°, the twist angle 14 of the nematic liquid crystal layer at 100°, and the angle 16 between the polarization axis 12 and the rubbing direction 52 set at 5°. A composition (eg. that known as ZI14718 of Merck & Co., Inc.; An = 0.0854) having a PCH compound as its main ingredient was used for the liquid crystal. The polarization plates and the orientation films were similar to those used in Example 1. In this case, the thickness of the nematic liquid crystal layer was set at 5.3 µm and And of the nematic liquid crystal layer at 0.45 µm.

The voltage applied to the active element 42 can be lower than 5.0 V by applying AC 3.5 V to the common electrode 40, and the drive voltage can also be reduced. The active elements permit the liquid crystal display to operate with a high response speed.

Thus, this example shows a liquid crystal display with a twist angle of 100°, (i.e. greater than 95° but notgreaterthan 150°), in which an alternating voltage is applied to the common electrode.

### Example 9

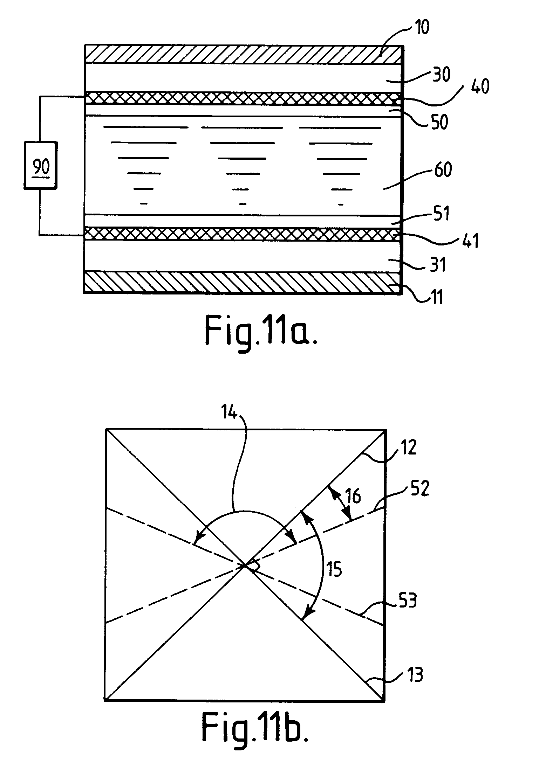

Figs. 11 (a) and 11 (b) illustrate a liquid crystal display being a fourth embodiment of the present invention. Fig. 11 (a) is a schematic sectional view of a liquid crystal display according to the present invention and Fig. 11(b) is a top view of the liquid crystal display showing the optical arrangement.

In the fourth embodiment shown in Fig. 11(a), transparent electrodes 40, 41 are formed on respective optically-transparent substrates 30, 31 and polarization plates 10, 11 are arranged outwardly of the respective substrates 30, 31. There are orientation films 50, 51 subjected to unidirectional rubbing inwardly of the electrodes. A nematic liquid crystal layer 60 is held between the orientation films 50, 51. A drive circuit 90 connected to a power supply for applying voltage to the nematic liquid crystal layer 60 is connected to the transparent electrodes 40, 41.

Fig. 11(b) shows the polarization axes 12, 13 of the respective polarization plates 10, 11, rubbing directions 52, 53 of the respective orientation films 50, 51, the twist angle 14 of the nematic liquid crystal layer 60; 15 the angle between the polarization axes of the polarization plates 10, 11, and the angle 16 between the polarization axis 12 and the rubbing direction 52.

In the structure of Fig. 11(a) and 11(b), the angle 15 between the polarization axes of the polarization plates was set at 90°, the twist angle 14 of the nematic liquid crystal layer set at 100°, and the angle 16 between the polarization axis 12 and the rubbing direction 52 set at 5°. Aliquid crystal ofChisso Corporation for low threshold voltage use (An = 0.072) (dielectric constant anisotropy AE greater than F) was employed; G1220DU of Nitto Electric Industrial Co., Ltd., (polarization: 99.95%) was used for the polarization plate; and RN - 718 of Nissan Chemical Industries, Ltd. forthe orientation film. In this case, the thickness of the nematic liquid crystal layer was set at 5.8 µm and And of the nematic liquid crystal layer at 0.42 µm.

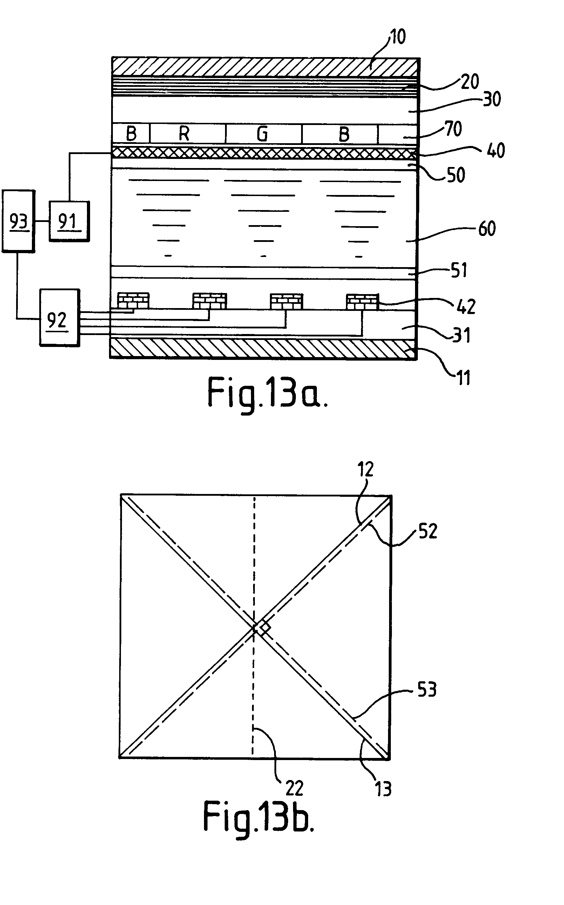

Fig. 12 shows the transmissivity/voltage characteristics of this liquid crystal display. The transmissivity at 4.1 V is 1% of that at zero volts and this makes it possible to reduce the drive voltage as compared with the case (Comparative Example 4 to be described later) where the voltage involved was 5.0 Vwhen the polarization axes and the rubbing directions were set parallel at a twist angle of 90°. Such a low threshold voltage liquid crystal has a less uneven display.

Thus, this example relates to a liquid crystal display with a twist angle of 100° (i.e. greater than 90° and less than 150°), and in which the nematic liquid crystal has a dielectric constant anisotropy greater than 4.

### Example 10

Figs. 13(a) and 13(b) illustrate a liquid crystal display being a fifth embodiment of the present invention. Fig. 13(a) is a schematic sectional view of a liquid crystal display according to the present invention and Fig. 13(b) is a top view of the liquid crystal display showing the optical arrangement

In the fifth embodiment shown in Fig. 13(a), a transparent common electrode 40 is formed on an optically-transparent substrate 30 and a substrate 31 is provided with active elements 42 for switching the applied voltage on a pixel basis. There are also a common voltage supply circuit 91, a scanning voltage.signal voltage supply circuit 92, and a supply source 93 for supplying a control signal, a data signal and supply voltage to the circuits 91, 92. A color filter 70 is arranged between the substrate 30 and the electrode 40, and polarization plates 10, 11 are also arranged outwardly of the substrates 30, 31. A phase difference plate 20 is arranged between the polarization plate 10 and the substrate 30 and there are orientation films 50, 51 subjected to unidirectional rubbing inwardly of the electrodes. A nematic liquid crystal layer 60 is held between the orientation films 50, 51.

Fig. 13(b) shows the polarization axes 12, 13 of the respective polarization plates 10, 11, the optical axis 22 of the phase difference plate 20, and the rubbing directions 52, 53 of the respective orientation films 50, 51.

In the structure of Fig. 13(b), the angle between the polarization axes of the polarization plates was set at 90°, the twist angle of the nematic liquid crystal layer at 90°, and the polarization axes and the rubbing directions were set parallel. Liquid crystal and polarization plates, and orientation films similar to those of Example 1 were used. The thickness of the nematic liquid crystal layer was set at 4.9 µm and And of the nematic liquid crystal layer set at 0.51 µm. Two uniaxially-oriented films of polycarbonate with And of 0.56 µm and 0.5 µm were stack-bonded to prepare the phase difference plate 20 so as to make the directions of orientation of the films cross at right angles. The phase difference plate formed of the two films had the optical axis in the direction of orientation of the polycarbonate films with And at 0.06 µm and was usable as a single phase difference plate. The optical axis 22 of the phase difference plate 20 formed of the two polycarbonate films made an angle of 90° with the direction of the vector sum of the rubbing directions 52, 53 of the orientation films 50, 51.

When AC 7.5 V is applied to the common electrode 40, the voltage applied to the active element 42 can be lower than 4.5 V by a suitable arrangement of the phase difference plate and the drive voltage can also be reduced. The phase difference plate compensates for the very small phase difference according to the present invention so as to make the contrast greater. With And placed under control, a bright liquid crystal display becomes possible. The active elements permit the liquid crystal display to operate with a high response speed.

Thus, this example relates to an embodiment which there is a phase difference plate, and the product of the thickness of the phase difference plate and the refractive index anisotropy of phase difference plate was 0.06wm, (ie. at least 0.005wm but not greater than 0.2wm). Furthermore, an alternating voltage is applied to the common electrode.

### Example 11

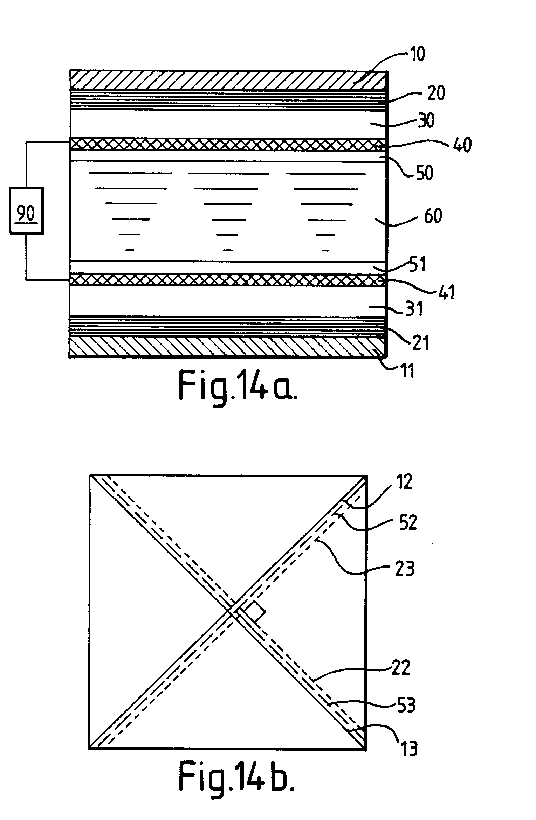

Figs. 14(a) and 14(b) illustrates a liquid crystal display being an sixth embodiment of the present invention. Fig. 14(a) is a schematic sectional view of a liquid crystal display according to the present invention and Fig. 14(b) is a top view of the liquid crystal display showing the optical arrangement.

In the sixth embodiment as shown in Fig. 14(a), transparent electrodes 40, 41 are formed on respective optically-transparent substrates 30, 31 and polarization plates 10, 11 are arranged outwardly of the respective substrates 30, 31. There are phase difference plates 20, 21 between the polarization plates 10, 11 and the substrates 30, 31, and there are orientation films 50, 51 subjected to unidirectional rubbing inwardly of the electrodes. A nematic liquid crystal layer 60 is held between the orientation films 50, 51. A drive circuit 90 connected to a power supply for applying voltage to the nematic liquid crystal layer 60 is connected to the transparent electrodes 40, 41.

Fig. 14(b) shows the polarization axes 12, 13 of the respective polarization plates 10, 11, the rubbing directions 52, 53 of the respective orientation films 50, 51, and the optical axes 22, 23 of the respective phase difference plates 20, 21.

In the structure of Fig. 14(b), the angle between the polarization axes of the polarization plates was set at 90°, the twist angle of the nematic liquid crystal layer set at 90°, and the polarization axes and the rubbing directions were set parallel. A liquid crystal of Chisso Corporation for low threshold voltage use (An = 0.072) was employed, the liquid crystal having a fluoride and a ester compound as main ingredients. Polarization plates and orientation films similar to those of Example 1 were used. The thickness of the nematic liquid crystal layer was set at 6.1 µm and And of the nematic liquid crystal layer at 0.44 µm. Two uniaxially-oriented films (polycarbonate) with And at 0.06 µm and 0.08 µm were stack-bonded to prepare the phase difference plate 20 in such a manner that the angle between the optical axis 22 of the phase difference plate 20 and the rubbing direction 52 of the orientation film 50 and the angle between the optical axis 23 of the phase difference plate 21 and the rubbing direction 53 of the orientation film 51 were set at 90°.

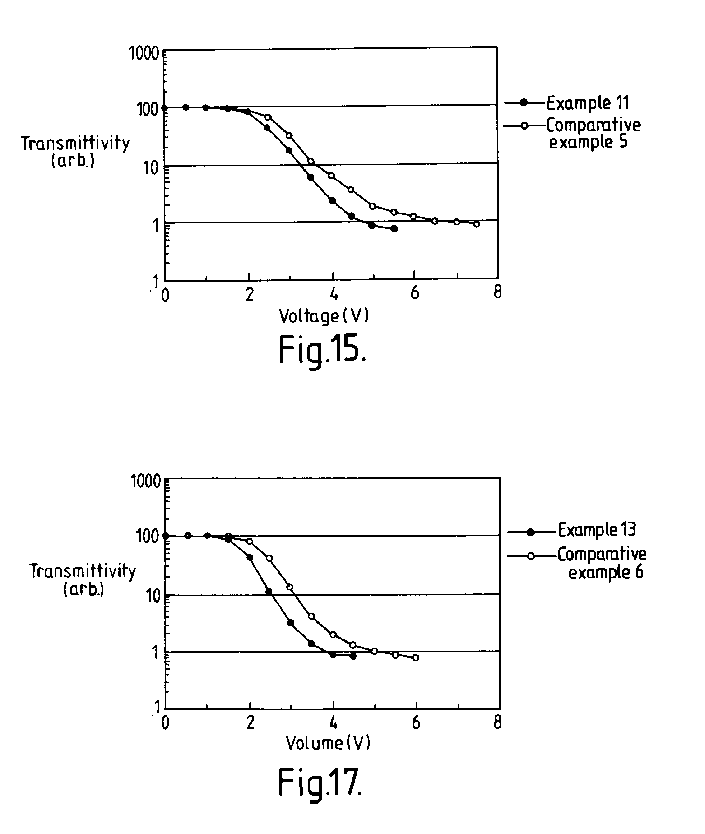

Fig. 15 shows the transmissivity/voltage characteristics of this liquid crystal display. The transmissivity at 4.7 V is 1% of that at zero volts and this makes it possible to reduce the drive voltage as compared with a case (Comparative Example 5 to be described later) where the voltage involved was 6.5 V without phase difference plates. The phase difference plates compensate for the very small phase difference according to the present invention so as to make the contrast greater. With And placed under control, a bright liquid crystal display becomes possible. The use of such a low threshold voltage liquid crystal contributes to decrease unevenness of the display.

Thus, this example relates to a liquid crystal display with phase difference plates with And of 0.06 and 0.08 a nematic liquid crystal with a dielectric constant anisotropy greater than 4.

### Example 12

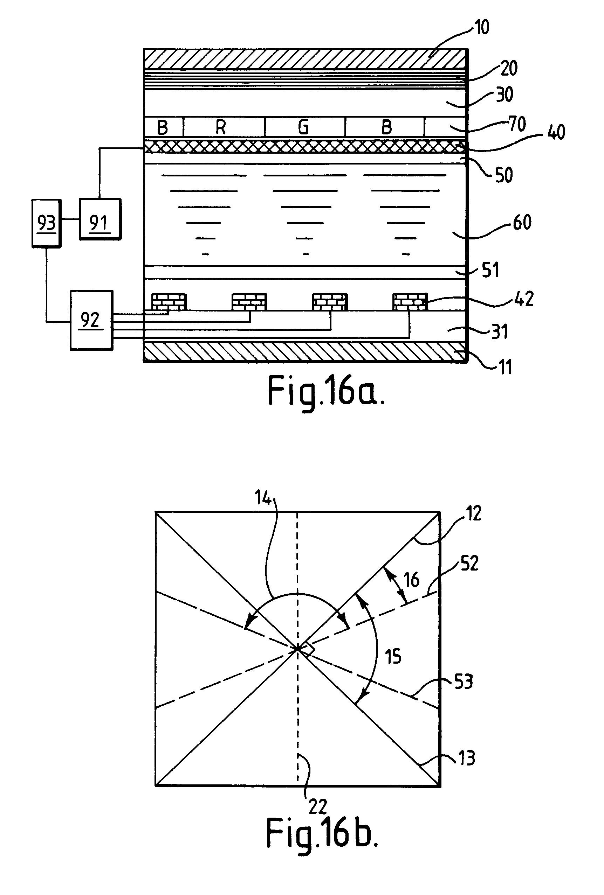

Figs. 16(a) and 16(b) illustrate a liquid crystal display being a seventh embodiment of the present invention. Fig. 16(a) is a schematic sectional view of a liquid crystal display according to the present invention and Fig. 16(b) is a top view of the liquid crystal display showing the optical arrangement.

In the seventh embodiment shown in Fig. 16(a), a transparent common electrode 40 is formed on an optically-transparent substrate 30 and a substrate 31 has active elements 42 for switching the applied voltage on a pixel basis. There are also a common voltage supply circuit 91, a scanning voltage.signal voltage supply circuit 92, and a supply source 93 forsup- plying a control signal, a data signal and supply voltage to the circuits 91, 92. There is a color filter 70 is between the substrate 30 and the electrode 40, and polarization plates 10, 11 are also arranged outside the substrates 30, 31. There is a phase difference plate 20 between the polarization plate 10 and the substrate 30 and there are orientation films 50, 51 subjected to unidirectional rubbing inwardly of the electrodes. A nematic liquid crystal layer 60 is held between the orientation films 50, 51. Fig. 16(b) shows polarization axes 12,13 of the respective polarization plates 10, 11, the optical axis 22 of the phase difference plate 20, rubbing directions 52, 53 of the respective orientation films 50, 51, the twist angle 14 of the nematic liquid crystal layer 60, the angle 15 between the polarization axes of the polarization plates 10, 11; and the angle 16 between the polarization axis 12 and the rubbing direction 52.

In the structure of Fig. 16(b), the angle 15 between the polarization axes of the polarization plates was set at 90°, the twist angle 14 of the nematic liquid crystal layer set at 105°; and the angle 16 between the polarization axis 12 and the rubbing direction 52 set at 7.5°. A liquid crystal, polarization plates and orientation films similar to those of Example 1 were used. In this case, the thickness of the nematic liquid crystal layer at 5.2 µm and And of the nematic liquid crystal layer was 0.55 µm. Two uniaxially-oriented films of polycarbonate with a value of And of 0.56 µm and 0.5 µm were stack-bonded to prepare the phase difference plate 20, so as to make the directions of orientation of the films cross at right angles. The phase difference plate formed of the twofilms had an optical axis in the direction of orientation of the polycarbonate films with a value of And of 0.56 µm and was usable as one phase difference plate having a phase difference of 0.06 µm. The optical axis 22 of the phase difference anisotropy And plate 20 formed of the two polycarbonate films made an angle of 90° with the direction of the vector sum of the rubbing directions 52, 53 of the orientation films 50,

When AC 6.0 V is applied to the common electrode 40, the voltage applied to the active element 42 can be lower than 4.5 V by arranging the phase difference plate and the drive voltage can also be reduced. The phase difference plate compensates for the very small phase difference so as to make the contrast greater. With And placed under control, a bright liquid crystal display becomes possible. The active elements permit the liquid crystal display to operate with a high response speed.

Thus, this example relates to an embodiment in which the twist angle is 105°, (ie. greaterthan 90° but notgreaterthan 150°), there is phase difference plate with Δnd of 0.06wm (ie. at least 0.005µm but not greaterthan 0.2µm). Furthermore, an altenating voltage is applied to the common electrode 40.

### Example 13

The structure of a liquid crystal display of an eighth embodiment is similar to that described with reference to Example 1 as discussed below. The structure of this liquid crystal display is as shown in Figs. 1 (a) and 1 (b).

In the structure of Fig. 1(b), the twist angle 14 of the nematic liquid crystal layer was set at 105°, and the angle 16 between the polarization axis 12 and the rubbing direction 52 at 7.5°. A liquid crystal of Chisso Corporation for low threshold voltage use (Δn = 0.078) (AE greater than 4) was employed, the liquid crystal having a difluoride compound as its main ingredients. The thickness of the nematic liquid crystal layer was 6.5 µm and And of the nematic liquid crystal layer was 0.51 µm. Two uniaxially-oriented films with And at 0.04 µm were used to form a phase difference plate that the angle between the optical axis 22 of the phase difference plate 20 and the rubbing direction 52 and the angle between the optical axis 23 of the phase difference plate 21 and the rubbing direction 53 were 90°.

Fig. 17 shows the transmissivity/voltage characteristics of this liquid crystal display. The transmissivity at 4.1 V is 1% of that at zero volt and this makes it possible to reduce the drive voltage as compared with the case (Comparative Example 6 to be described later) where the voltage involved was 5.1 V without phase difference plates. The phase difference plates compensate for the very small phase difference so as to make the contrast greater. With And placed under control, a bright liquid crystal display becomes possible. The use of such a low threshold voltage liquid crystal contributes to decrease unevenness of the display.

Thus, this example illustrates a liquid crystal display in which the twist angle is 105° (ie. greater than 90° but not greater than 150⁰), And is 0.04µm (at least 0.05wm but not greater than 0.2µm), and the nematic liquid crystal has a dielectric constant anisotropy greater than 4.

### Example 14

The structure of the liquid crystal display of a ninth embodiment is similar to that described with reference to Example 8 except as discussed below. In this liquid crystal display is as shown in Fig. 10.

In the structure of this liquid crystal display, a liquid crystal of Chisso Corporation for low threshold voltage use (An = 0.078) (AE greater than 4) was employed. The thickness of the nematic liquid crystal layer was set at 6.0 µm and And of the nematic liquid crystal layer was 0.47 µm.

When AC 3.3 V is applied to the common electrode 40, the voltage applied to the active element 42 can be lower than 4.3 V and the drive voltage can also be reduced. The active elements permit the liquid crystal display to operate with a high response speed. The use of such a low threshold voltage liquid crystal contributes to decrease unevenness of the display.

Thus, this example shows a liquid crystal display with a twist angle of 100° (greater than 90° but not greater than 150°), a nematic liquid crystal having a dielectric constant anisotropy greater than 4, and in which an altenating voltage is applied to the common electrode. This is one of the currently preferred embodiments.

### Example 15

The structure of a liquid crystal display of a fifteenth embodiment is similar to that described in Example 10 except as discussed below. The structure of this liquid crystal display is as shown in Fig. 13.

In this liquid crystal display, a liquid crystal of Chisso Corporation for low threshold voltage use (An = 0.078) (AE greater than 4) was employed. The thickness of the nematic liquid crystal layer was 6.7 µm and And of the nematic liquid crystal layer was 0.52 µm.

When AC 3.5 V is applied to the common electrode 40, the voltage applied to the active element 42 can be lower than 4.3 V by a suitable arrangement of the phase difference plate, and the drive voltage can also be reduced. The phase difference plate compensates for the very small phase difference so as to make the contrast greater. With And placed under control, a bright liquid crystal display becomes possible. The active elements make available a liquid crystal display which operates with a high response speed. The use of such a low threshold voltage liquid crystal contributes to decrease unevenness of the display.

This example thus illustrates a liquid crystal display in which the nematic liquid crystal has a dielectric constant anisotropy greater than 4, there is a phase difference plate with And of 0.06µm (at least 0.05µm but not greater than 0.2µm), and in which an AC voltage is applied to the common electrode.

### Example 16

The structure of a liquid crystal display of a sixteenth embodiment is similar to that described in Example 12 except as discussed below. The structure of this liquid crystal display is as shown in Figs. 16(a) and 16(b).

In this liquid crystal display, a liquid crystal of Chisso Corporation for low threshold voltage use (An = 0.078) (Δ∈ greater than 4) was employed. The thickness of the nematic liquid crystal layer was 7.0 µm and And of the nematic liquid crystal layer was 0.55 µm.

When AC 3.5 V is applied to the common electrode 40, the voltage applied to the active element 42 can be lower than 3.8 V by a suitable arrangement of the phase difference plate and the drive voltage can also be reduced. The phase difference plate compensates for the very small phase difference so as to make the contrast greater. With And placed under control, a bright liquid crystal display becomes possible. The active elements permit the liquid crystal display to operate with a high response speed. The use of such a low threshold voltage liquid crystal contributes to decrease unevenness of the display.

Thus, this example illustrates a liquid crystal display in which the nematic liquid crystal has a dielectric constant anisotropy greater than 4, a twist angle of 105° (greater than 90° but not greater than 150°), a phase difference plate with And of 0.06wm (greater than 0.05wm but less than 0.2µm) and in which an AC voltage is applied to the common electrodes. This is another currently preferred embodiment.

### Example 17

The structure of a liquid crystal display in this case is similar to that described in Example 16 except as will be described below. The structure of this liquid crystal display is as shown in Figs. 16(a) and 16(b).

In this liquid crystal display, a liquid crystal of Chisso Corporation for low threshold voltage use (An = 0.0764) (Δ∈ greater than 4) was employed, the liquid crystal having a fluoride and a PCH compound as main ingredients. The thickness of the nematic liquid crystal layer was 7.0 µm and And of the nematic liquid crystal layer was 0.53 µm.

When AC 3.2 V is applied to the common electrode 40, the voltage applied to the active element 42 can be lower than 3.0 V using a suitable arrangement of the phase difference plate and the drive voltage can also be reduced, so that the liquid crystal display may be driven by a driver LSI at a withstand voltage of 3.5 V.

Thus, this example is similar to example 16.

### Comparative Example 1

The structure of this liquid crystal display was similar to that of Example 1. However, it had a twist angle of 90° and the polarization axes were parallel to the rubbing directions. Furthermore, the phase difference plates 20, 21, were absent.

### Comparative Example 2

The structure of this liquid crystal display was similar to that of Example 6. However, it had a twist angle of 90° and the polarization axes were parallel to the rubbing directions. Furthermore, the phase difference plate was absent.

### Comparative Example 3

The structure of this liquid crystal display was similar to that of Example 7. However, it had a twist angle of 90° and the polarization axes were in parallel to the rubbing directions. Furthermore, the phase difference plate was absent.

### Comparative Example 4

The structure of this liquid crystal display was similar to that of Example 9. However, it had a twist angle of 90° and the polarization axes were in parallel to the rubbing directions. As in Example 9, the phase difference plate was absent.

### Comparative Example 5

The structure of this liquid crystal display was similar to that of Example 11, but without the phase difference plates.

### Comparative Example 6

The structure of this liquid crystal display was similar to that of Example 13. However, it had a twist angle of 90° and the polarization axes were parallel to the rubbing directions. Furthermore, the phase difference plates 20, 21 were absent.

A liquid crystal display according to the present invention can be used as a display in note-type personal computers, laptop computers, wordprocessors, workstations, televisions and the like. A liquid crystal display according to the present invention may also be used for projectors.

A liquid crystal display according to the present invention permits the liquid crystal driving voltage to be reduced. It can be driven by a low withstand-voltage drive circuit.

## Claims

1. A liquid crystal display having a nematic liquid crystal (60), at least one polarization plate (10,11), orientation films (50, 51) in contact with opposite sides of the nematic liquid crystal (60) and electrodes (40, 41, 42) on opposite sides of the nematic liquid crystal (60) for controlling the transmission of light through the nematic liquid crystal (60) and the at least one polarization plate( 10, 11), the nematic liquid crystal (60) having an dielectric constant anisotropy greater than 4:
characterized in that:
the orientation films (50, 51) are arranged such that the nematic liquid crystal (60) has a twist angle greater than 90° but not greater than 150°.

2. A liquid crystal display according to claim 1, having a drive circuit (90) connected to the electrodes (40, 42), the electrode (42) on one side of the nematic liquid crystal forming a matrix of active elements, and the drive circuit (90) is arranged to apply an alternating voltage to the electrode (40) on the other side of the nematic liquid crystal.

3. A liquid crystal display according to claim 1 or claim 2, wherein the twist angle is greater than 90°.

4. A liquid crystal display according to any one of the preceding claims, wherein the twist angle is not greater than 120°.

5. A liquid crystal display having a nematic liquid crystal (60), at least one polarization plate (10, 11), orientation films (50, 51) in contact with opposite sides of the nematic liquid crystal (60), electrodes (40, 42) on opposite sides of the nematic liquid crystal (60) for controlling the transmission of light through the nematic liquid crystal (60) and the at least one polarization plate (10, 11), and a drive circuit (90) connected to the electrodes (40, 42), the electrode (42) on one side of the nematic liquid crystal (60) forming a matrix of active elements, and the drive circuit (90) is arranged to apply alternating voltage to the electrode (40) on the other side the nematic liquid crystal (60),
characterized in that:
the orientation films (50, 51) are arranged such that the nematic liquid crystal (60) has a twist angle greater than 90° but not greater than 150°.

6. A liquid crystal display according to any one of claims 1 to 5, in which there is a phase difference plate (20, 21), the product of the thickness of the phase difference plate (20, 21) and the refractive index anisotropy of the phase difference plate (20, 21) being at least 0.005wm but not greater than 0.2µm.

7. A liquid crystal display having a nematic liquid crystal (60), at least one polarization plate (10, 11), orientation films (50, 51) in contact with opposite sides of the nematic liquid crystal (60) and electrodes (40, 41, 42) on opposite sides of the nematic liquid crystal (60) for controlling the transmission of light through the nematic liquid crystal (60) and the at least one polarization plate (10, 11);
characterized in that:
the orientation films (50, 51) are arranged such that the nematic liquid crystal (60) has a twist angle greater than 90° but not greater than 150⁰ and
the liquid crystal display has a phase difference plate (20, 21), the product of the thickness of the phase difference plate (20, 21) and the refractive index anisotropy of the phase difference plate (20, 21) being at least 0.005wm but not greater than 0.2µm.

8. A liquid crystal display having a nematic liquid crystal (60), at least one polarization plate (10, 11), orientation films (50, 51) in contact with opposite sides of the nematic liquid crystal (60) and electrodes (40, 41, 42) on opposite sides of the nematic liquid crystal (60) for controlling the transmission of light through the nematic liquid crystal (60) and the at least one polarization plate (10,11), the nematic liquid crystal (60) having an dielectric constant anisotropy greater than 4:
characterized in that:
the liquid crystal display has a phase difference plate (20, 21), the product of the thickness of the phase difference-plate (20, 21) and the refractive index anisotropy of the phase difference plate (20, 21) being at least 0.005wm but not greater than 0.2µm.

9. A liquid crystal display according to claim 8, having a drive circuit (90) connected to the electrodes (40, 42), the electrode (42) on one side of the nematic liquid crystal (60) forming a matrix of active elements, and the drive circuit (90) is arranged to apply alternating voltage to the electrode (40) on the other side of the nematic liquid crystal (60).

10. A liquid crystal display having a nematic liquid crystal (60), at least one polarization plate (10, 11), orientation films (50, 51) in contact with opposite sides of the nematic liquid crystal (60), electrodes (40, 41, 42) on opposite sides of the nematic liquid crystal for controlling the transmission of light through the nematic liquid crystal (60) and the at least one polarization plate (10, 11), and a drive circuit (90) connected to the electrodes, the electrode (42) on one side of the nematic liquid crystal (60) forming a matrix of active elements, and the drive circuit (90) being arranged to apply alternating voltage to the electrode (40) on the other side the nematic liquid crystal (60),
characterized in that:
there is a phase difference plate (20, 21), the product of the thickness of the phase difference plate (20, 21) and the refractive index anisotropy of the phase difference plate (20, 21) being at least 0.005wm but not greater than 0.2µm.

11. A liquid crystal display according to any one of the preceding claims having a color filter (70) therein.

12. A liquid crystal display according to any one of the preceding claims, being a TFT liquid crystal display.
